# EUROPÄISCHE PATENTSCHRIFT

(11) **EP 4 036 448 B1**
(45) Veröffentlichungstag und Bekanntmachung des Hinweises auf die Patenterteilung: **31.12.2025**
(21) Anmeldenummer: 22153640.2
(22) Anmeldetag: 27.01.2022
(51) Int. Cl.: F16L 5/02, E04G 15/06

(54) **DURCHFÜHRUNG ZUM EINGIESSEN IN EIN WAND- ODER BODENELEMENT**
FEEDTHROUGH FOR POURING INTO A WALL OR FLOOR ELEMENT
CONDUITE POUVANT S'INTRODUIRE DANS UN ÉLÉMENT DE MUR OU DE SOL

(30) Priorität: 29.01.2021 DE 102021102039
(43) Veröffentlichungstag der Anmeldung: 03.08.2022
(73) Patentinhaber: Hauff-Technik GmbH & Co. KG, 89568 Hermaringen (DE)
(72) Erfinder: HUG, Christian, 89518 Heidenheim (DE); SCHMID, Jörg, 89168 Niederstotzingen (DE)
(74) Vertreter: Szynka Smorodin Patentanwälte Partnerschaft mbB

(56) Entgegenhaltungen:
- GB-A- 2 171 139
- KR-B1- 101 671 282
- US-A- 3 523 552
- US-A1- 2009 032 281

## Beschreibung

Die vorliegende Erfindung betrifft eine Durchführung zum Einsetzen in eine Schalung und Eingießen in ein Wand- oder Bodenelement.

Die Durchführung weist ein Rohrelement auf, das nach dem Eingießen eine Öffnung in dem Wand- oder Bodenelement freihält, insbesondere eine die beiden einander entgegengesetzten Seitenflächen des Wand- oder Bodenelements miteinander verbindende Durchgangsöffnung. Durch diese kann dann später die eigentliche Leitung verlegt werden, bspw. ein Medienrohr oder insbesondere ein Kabel, etwa ein Strom- oder Datenkabel.

Die US 3,523,552 B betrifft eine Durchführung für betonierte Wände, die aus zwei zueinander federbeaufschlagten Rohrstücken zusammengesetzt ist.

Die GB 2 171 139 A betrifft eine ebenfalls aus mehreren Rohrstücken zusammensetzte Durchführung, wobei diese miteinander verschraubt und zusammengesteckt werden.

Die US 2009/0032281 A1 betrifft eine Durchführungshülse zum Einbetonieren, die ein Sonderbauteil mit integriertem Flansch und eingeformten Faltenbalg umfasst. Die KR 10-1671282 B betrifft eine Durchführung mit federbeaufschlagten Aufsätzen zum Verspreizen bzw. -rasten in einer Schalung.

Der vorliegenden Erfindung liegt das technische Problem zugrunde, eine vorteilhafte Durchführung sowie eine vorteilhafte Verwendung dieser Durchführung anzugeben.

Dies wird erfindungsgemäß mit der Durchführung nach Anspruch 1 und deren Verwendung nach Anspruch 12 gelöst. Die erfindungsgemäße Durchführung weist ein Kompensationselement auf, das bei einem axialen Druck auf die Durchführung dahingehend verformbar ist, dass die Länge der Durchführung etwas abnimmt. Wie nachstehend im Einzelnen erläutert, kann das Kompensationselement dabei bspw. komprimiert oder verbogen bzw. axial gestaucht werden, etwa infolge einer radialen Weitung. Unabhängig vom Kompensationsmechanismus im Einzelnen kann das Kompensationselement einen gewissen axialen Druck auf die Durchführung über die Längenänderung abfangen.

Damit kann bspw. einer Beschädigung des Rohrelements vorgebeugt werden, etwa einem Brechen bzw. Aufreißen. Infolge einer solchen Beschädigung könnte das Vergussmaterial, also typischerweise Beton, in das Rohrelement hineinlaufen, was das spätere Hindurchführen der Leitung oder jedenfalls Abdichten derselben erschweren kann. Es kann sich bspw. auch bereits durch eingedrungene Betonmilch eine Beeinträchtigung der Dichtflächen ergeben.

Zu einem Versatz der Schalungselemente, zwischen denen die Durchführung zum Eingießen angeordnet wird, kann es dabei nicht nur bei einer manuellen Herstellung der Schalung, sondern insbesondere bei einer automatisiert schließenden Schalung kommen. Eine solche Automatisierung kann bspw. in der Fertigbetonteilherstellung Anwendung finden, wo mit denselben Schalungselementen nacheinander eine Vielzahl baugleiche Betonfertigteile hergestellt werden. Diese Schalungselemente können z. B. vergleichsweise schwer sein, was umgekehrt zu einer nicht immer identischen Bewegungsbahn bzw. Endposition führen kann. Es kann bspw. zu einem "Überschwingen" kommen, infolgedessen die Schalungselemente dann beim bzw. am Ende des Schließvorgangs temporär einander näher kommen können als in der Endposition (siehe unten im Detail). Unabhängig vom Schalmechanismus im Einzelnen kann mit der erfindungsgemäßen Durchführung bzw. deren Verwendung eine gewisse Kompensation erfolgen und einer Beschädigung vorgebeugt werden. Der vorliegende Ansatz geht dahin, eine gewisse Verformung zuzulassen (also kein absolut starres System zu schaffen), diese mit dem Kompensationselement aber an definierter Stelle und damit weniger beschädigungsträchtig aufzunehmen.

Bevorzugte Ausgestaltungen finden sich in den abhängigen Ansprüchen und der gesamten Offenbarung, wobei in der Darstellung der Merkmale nicht immer im Einzelnen zwischen den unterschiedlichen Anspruchskategorien unterschieden wird; jedenfalls implizit ist die Offenbarung stets sowohl auf Vorrichtungs- als auch auf Verfahrens- bzw. Verwendungsaspekte zu lesen. Werden bspw. die Vorteile einer in bestimmter Weise ausgestalteten Durchführung am Beispiel einer bestimmten Anwendung geschildert, ist dies zugleich als Offenbarung einer entsprechenden Verwendung zu lesen, und umgekehrt. Offenbart sein soll ferner ein gegossenes Wand- oder Bodenelement, in das eine vorliegend offenbarte Durchführung eingegossen ist.

Generell wird die Durchführung bevorzugt solchermaßen in die Schalung eingesetzt, dass ein axiales Ende der Durchführung an einem ersten Schalungselement anliegt und das axial entgegengesetzte Ende der Durchführung an einem zweiten Schalungselement anliegt, welches gemeinsam mit dem ersten Schalungselement eine Kavität begrenzt. Das erste und das zweite Schalungselement liegen also einander gegenüber, die von der eingesetzten Durchführung und dann dem Vergussmaterial berührten Wandflächen der Schalungselemente sind also einander zugewandt. Bei dem Vergussmaterial handelt es sich bevorzugt um Beton, wenngleich die Vorteile des Erfindungsgegenstands auch bei einem anderen Vergussmaterial zum Tragen kommen können.

Beim bzw. nach dem Vergießen umschließt das Vergussmaterial das Rohrelement der Durchführung, legt es sich also insbesondere vollständig umlaufend an dessen Außenwandfläche an. Generell beziehen sich die Angaben "axial", "radial" und "umlaufend", sowie die zugehörigen Richtungen ("axiale Richtung" etc.), im Rahmen dieser Offenbarung auf die Rohrachse. Diese kann bspw. mittig in der vom Rohrelement freigehaltenen Öffnung liegen; das Rohrelement kann um die Rohrachse z. B. zumindest dreh-, bevorzugt rotationssymmetrisch sein; die Rohrachse kann nach dem Eingießen der Durchführung bspw. senkrecht auf den einander entgegengesetzten Seitenflächen des Wand- oder Bodenelements stehen.

Gemäß einer bevorzugten Ausführungsform ist das Kompensationselement solchermaßen federnd vorgesehen, dass es bei Wegnahme der Belastung wieder in seine bzw. zu seiner ursprünglichen Form hinstrebt. Es muss diese im Allgemeinen nicht wieder in Gänze einnehmen, auch nicht im vollständig unbelasteten Zustand; es kann also in anderen Worten z. B. eine gewisse plastische Verformung verbleiben. Bezogen auf eine Abnahmelänge, um welche die Länge der Durchführung aufgrund des Kompensationselements während der Belastung abnimmt, kann nach vollständiger Wegnahme der Belastung die Länge der Durchführung um bspw. mindestens 30 %, 50 %, 70 % bzw. 80 % der Abnahmelänge wieder zunehmen; eine mögliche Obergrenze kann bei 90 % liegen, es sind aber auch 100 % möglich (vollständige Rückkehr in die ursprüngliche Form).

Ein entsprechend zumindest anteilig federnd ausgebildetes Kompensationselement kann gleichwohl von Vorteil sein, etwa mit Blick auf das vorstehend geschilderte "Überschwingen" eines Schalungselements. Das Kompensationselement kann dann bspw. während bzw. am Ende des Schließvorgangs sicherstellen, dass das Rohrelement nicht durch einen Überschwinger beschädigt wird, und die Federwirkung dann auch danach beim Eingießen eine Anlage an oder zumindest einen nicht zu großen Abstand zu dem Schalungselement sicherstellen.

Generell kann die Durchführung im originären, nicht druckbeaufschlagten Zustand bspw. eine axiale Länge von mindestens 6 cm, 10 cm, 15 cm bzw. 20 cm haben, wobei (davon unabhängig) mögliche Obergrenzen bspw. bei höchstens 2 m, 1,5 m, 1 m, 0,5 m, 0,4 m bzw. 0,3 m liegen können. Die über das Kompensationselement mögliche axiale Längenreduktion kann bspw. mindestens 1 %, 2 % oder 3 % der axialen Länge ausmachen, wobei mögliche Obergrenzen bspw. bei höchstens 20 %, 15 %, 10 % bzw. 8 % liegen können. Alternativ oder zusätzlich kann die mögliche Längenreduktion in absoluten Werten bspw. mindestens 0,5 cm bzw. 1 cm ausmachen, mit möglichen (davon unabhängigen) Obergrenzen bei bspw. höchstens 10 cm, 8 cm, 6 cm, 4 cm bzw. 3 cm.

Gemäß einer bevorzugten Ausführungsform ist das Kompensationselement in Form eines Axialabschnitts mit verringerter Wanddicke realisiert. Dieser Axialabschnitt ist bevorzugt axial endseitig am Rohrelement vorgesehen, er kann dann bspw. beim Einschalen und/oder Eingießen an dem Schalungselement anliegen. Die Dicke der Wandung in dem Axialabschnitt kann bspw. geringer als die Dicke des Rohrelements in einem an den Axialabschnitt anschließenden Abschnitt sein, bspw. um mindestens 20 %, 40 % bzw. 60 % und z. B. um nicht mehr als 95 % oder 90 %. Axial kann sich die Wandung mit der verringerten Dicke bspw. über mindestens 0,5 cm bzw. 1 cm erstrecken, mit möglichen (davon unabhängigen) Obergrenzen bei bspw. höchstens 10 cm, 8 cm, 6 cm, 4 cm bzw. 3 cm. Aufgrund der verringerten Wanddicke kann der Axialabschnitt von der Schalung ein Stück weit axial zusammengedrückt oder radial geweitet werden. Hat die Wandung im undeformierten Zustand in einem Axialschnitt betrachtet bspw. eine geradlinige und ausschließlich axiale Erstreckung, kann sie bspw. ziehharmonikaförmig zusammengedrückt werden.

Gemäß einer bevorzugten Ausführungsform, die bevorzugt mit der verringerten Wanddicke kombiniert, im Allgemeinen aber auch als Alternative dazu vorgesehen sein kann, ist eine/die Wandung in einem/dem Axialabschnitt mit einer konischen Form gefasst. Hinsichtlich einer möglichen axialen Erstreckung des Axialabschnitts mit konusförmiger Wandung wird auf die Angaben im vorherigen Absatz verwiesen (mindestens 0,5 cm und höchstens 10 cm, sowie die weiteren Ober-/Untergrenzen). Bevorzugt weitet sich der Konus zum axialen Ende der Durchführung hin, sodass der Konus unter dem Druck des Schalungselements noch weiter aufgedehnt wird. Das Schalungselement legt sich also bspw. beim Schließen an den Rand der Wandung an, der aufgrund der Konusform einen größeren Umfang hat, und dehnt die Wandung weiter auf, bspw. bei Überschreiten eines bestimmten Schwellenwerts. Letzteres kann allgemein, auch unabhängig von der konstruktiven Umsetzung, ein Merkmal des Kompensationselements sein, sodass dessen Verformung also erst eintritt, wenn ein Schwellenwert überschritten wird (und nicht ab einem Druck gleich Null kontinuierlich ansteigt).

Bevorzugt ist die Konusform mit der verringerten Wanddicke kombiniert, weil dies das Aufdehnen begünstigen kann (oder im Allgemeinen auch ein Stauchen bei einem nach innen zulaufenden Konus). Generell, egal ob mit verringerter Dicke und/oder konisch gefasst, kann die Wandung umlaufend in sich geschlossen sein und sich axial zu einem freien Ende hin erstrecken. Letzteres liegt dann bspw. an der Schalung an und wird im Falle der Deformation in Richtung des axial entgegengesetzten Endes der Durchführung versetzt. Mit einer der Rohrachse zugewandten Innenwandfläche kann die Wandung einen axial endseitigen, z. B. vergleichsweise kurzen Abschnitt der Durchgangsöffnung freihalten. Entsprechend kann sich beim Eingießen an die entgegengesetzte, also der Rohrachse abgewandte Außenwandfläche der Wandung Vergussmaterial anlegen. Jedenfalls im Ausgangszustand, also vor einer etwaigen Verformung, kann die Wandung bevorzugt rotationssymmetrisch sein, was z. B. eine gleichmäßige Deformation und damit etwa gleichmäßige Anlage an der Schalung fördern kann.

Erfindungsgemäß ist das Kompensationselement an einem Stopfen ausgebildet, der axial endseitig an das Rohrelement angesetzt, nämlich in dieses eingesetzt ist. Es ist dann bspw. ein axiales Teilstück des eingesetzten Stopfens in dem Rohrelement angeordnet und steht ein anderes axiales Teilstück davon aus diesem hervor. Im Allgemeinen kann das Kompensationselement bspw. auch durch eine federnde Lagerung des Stopfens am Rohrelement realisiert werden (vergleiche im Detail die nachstehend für zwei Rohrelementteilstücke offenbarten Möglichkeiten). Bevorzugt ist ein eben geschilderter Axialabschnitt mit der Wandung verringerter Dicke und/oder konischer Form an dem Stopfen ausgebildet. Von dem Rohrelement bzw. einem Rohrelementteilstück (siehe unten) kann sich der Stopfen bspw. insofern unterscheiden, als sich allenfalls im zur Kompensation vorgesehenen Axialabschnitt Vergussmaterial anlegt, also an die Wandung. Betrachtet man z. B. die weitere Verwendung nach dem Gießen des Wand- oder Bodenelements, verbleibt dann bspw. das Rohrelementteilstück in dem Wand- oder Bodenelement, wohingegen der Stopfen nach dem Entschalen herausgenommen wird.

Bevorzugt ist der Stopfen reversibel in das Rohrelement einsetzt- und aus diesem herausnehmbar, lässt er sich dann also zerstörungsfrei entfernen. Um vor bzw. bei dem Eingießen einen guten Halt im Rohrelement zu schaffen, kann der Stopfen in dem eingeschobenen Abschnitt außenseitig mit einer Erhebung gefasst sein. Diese kann bspw. als sich nach radial außen hervortretende Lamelle vorgesehen sein, die sich vollständig oder auch nur teilweise umlaufend erstrecken kann. Bevorzugt kann eine Kombination mehrerer Lamellen sein, besonders bevorzugt aus vollständig und teilweise umlaufenden Lamellen. Unabhängig von diesen Details kann bzw. können die Lamellen beim Einschieben des Stopfens in das Rohrelement axial ein wenig ausgelenkt werden und damit einen guten Halt schaffen.

Gemäß einer bevorzugten Ausführungsform ist zumindest der zur Anlage an der Schalung vorgesehene Axialabschnitt des Stopfens aus einem verglichen mit dem Rohrelement weicheren Material vorgesehen. Dieses "weichere" Material kann bspw. eine geringere Shore-Härte als das Rohrelementmaterial haben, insbesondere als das Material desjenigen Rohrelementteilstücks, in welches der Stopfen eingesetzt ist bzw. wird. Bevorzugt ist nicht nur der Axialabschnitt, sondern der Stopfen insgesamt aus dem weicheren Material geformt. Das Rohrelement bzw. Rohrelementteilstück kann bspw. aus Acrylnitril-Butudien-Styrol (ABS) oder Polycarbonat (PC) geformt sein, der Axialabschnitt bzw. gesamte Stopfen z. B. aus Polyethylen oder Polypropylen. Eine unterschiedliche Härte kann aber bspw. auch unabhängig vom Matrixmaterial über einen Füller erreicht werden, etwa durch eine Faserverstärkung des Rohrelementteilstücks.

Wie erwähnt, kann die den Axialabschnitt bildende Wandung des Stopfens mit verringerter Dicke und/oder konischer Form gefasst sein, was bevorzugt mit dem weicheren Material kombiniert sein kann. Letzteres ist aber nicht obligatorisch, im Allgemeinen kann auch das weichere Material für sich, unabhängig von der Ausbildung einer Wandung mit spezifischer Dicke/Form, eine hinreichende Kompensation schaffen, also unter Druck axial komprimiert werden. Der Stopfen kann während des Eingießens insbesondere solchermaßen in das Rohrelement der Durchführung eingesetzt sein, dass der Axialabschnitt aus dem Rohrelement hervorsteht.

Generell kann das Rohrelement an einem axialen Ende mit einem Flansch ausgestattet sein, etwa einer Flanschplatte, z. B. mit polygonaler, insbesondere rechteckiger/quadratischer Form (axial gesehen). Der Flansch kann bevorzugt einstückig bzw. monolithisch mit dem Rohrelement geformt sein, also z. B. mit einem den entsprechenden Abschnitt des Rohrelements bildenden Rohrelementteilstück (siehe unten). Im Allgemeinen kann auch an beiden axialen Enden jeweils ein entsprechender Flansch vorgesehen sein, bevorzugt gibt es jedoch nur genau ein Ende mit Flansch (ist am anderen also kein Flansch angeordnet). Mit einem vorstehend diskutierten Stopfen kann, auch unabhängig von einem etwaigen Flansch, nur genau ein axiales Ende der Durchführung ausgestattet sein, es können aber auch beide axiale Enden mit jeweils einem Stopfen ausgestattet sein. Bevorzugt ist Ersteres, besonders bevorzugt ist der Stopfen an einem axialen Ende ohne Flansch angeordnet und ist am anderen axialen Ende des Rohrelements (an dem dann kein Stopfen mit Kompensationselement angeordnet ist) ein Flansch vorgesehen.

"Einstückig" meint nicht zerstörungsfrei abtrennbar (siehe vorne). Die Einstückigkeit kann insbesondere durch ein monolithisches Teil realisiert sein, etwa aus demselben unterbrechungsfrei durchgehenden Material geformt, etwa aus derselben Komponente durch Spritzguss.

Im Falle des Stopfens wird der Axialabschnitt nach dem Entschalen mit dem Stopfen herausgenommen wird. Ein Vorteil des Stopfens kann bspw. in der Nachrüstbarkeit liegen, ebenso können bspw. mehrere Stopfen mit unterschiedlich großen, also unterschiedlich langen Axialabschnitten vorgehalten und je nach Länge der Durchführung eingesetzt werden (sodass z. B. im Wesentlichen dieselbe prozentuale Kompensation erreicht wird).

Gemäß einer bevorzugten Ausführungsform ist das Rohrelement aus einem ersten und einem zweiten Rohrelementteilstück zusammengesetzt, die beim Eingießen z. B. unterschiedliche Axialabschnitte der Durchgangsöffnung freihalten. Beim Eingießen der Durchführung legt sich bspw. an beide Rohrelementteilstücke Vergussmaterial an; beide Rohrelementteilstücke verbleiben dauerhaft in dem Wand-oder Bodenelement.

Eine mehrteilige Ausgestaltung des Rohrelements kann generell bevorzugt sein, egal ob das Kompensationselement dazwischen oder axial endseitig vorgesehen ist. Gemäß einer bevorzugten Ausführungsform ist dann an oder in einem Überlappbereich, in dem die zusammengesetzten Rohrelementteilstücke radial aufeinanderfolgend angeordnet sind, eine mechanische Verstärkung vorgesehen. Eine solche kann bspw. auch durch einen eine Nut bildenden Kragen geschaffen sein. Die Nut kann nämlich Stabilität schaffen, etwa einem Relativverkippen der zusammengesetzten Rohrelementteilstücke und/oder einem Aufspreizen des in die Nut eingeschobenen Rohrelementteilstücks vorbeugen (also des zweiten Rohrelementteilstücks im Beispiel oben). Ein solches Aufspreizen kann im Besonderen relevant sein, wenn das zweite Rohrelementteilstück z. B. ein Mehrkomponenten-Spritzgußteil ist, weil dann z. B. Anspritzkanäle der Weichkomponente die Struktur des aus der Hartkomponente gespritzten Rohrelements schwächen können.

Generell kann im Falle des mehrstückigen Rohrelements die mechanische Verstärkung an oder im Überlappbereich die Stabilität der Durchführung unter der axialen Druckeinwirkung erhöhen. Damit kann ein etwaiger Schwellenwert, ab dem dann das Kompensationselement maßgeblich Verformung aufnimmt, höher liegen, ohne dass es zu einer Beschädigung kommt. Die Kombination aus mechanischer Verstärkung und Kompensationselement kann in anderen Worten ein im Rahmen der normalen Handhabung (Einsetzen in die Schalung etc.) weitgehend formstabiles und damit gut handhabbares Teil ergeben, wobei Belastungsspitzen trotzdem abgefangen werden können.

In bevorzugter Ausgestaltung ist die mechanische Verstärkung in Form einer Verrippung vorgesehen, bevorzugt an der Außenwandfläche des entsprechenden Rohrelementteilstücks. Die Verrippung ist bevorzugt einstückig, insbesondere monolithisch mit dem Rohrelementteilstück ausgebildet, also z. B. angeformt. Mit der Anordnung an der Außenwandfläche kann z. B. einem späteren Verheddern der Leitung vorgebeugt werden. Die Verrippung kann bspw. einen sich umlaufend erstreckenden Ring aufweisen, der vollständig umlaufend (in sich geschlossen) oder segmentiert ausgeführt sein kann. Dieser Ring kann bevorzugt als Anschlag für das andere Rohrelementteilstück dienen. An einer der Anschlagsfläche des Rings axial entgegengesetzten Seite können sich Rippen von dem Ring weg erstrecken, bevorzugt axial.

Wie bereits erwähnt, betrifft die Erfindung auch die Verwendung einer vorliegend offenbarten Durchführung. Die entsprechenden Verfahrens- bzw. Verwendungsmerkmale sollen dabei auch hinsichtlich eines entsprechenden Arbeitsverfahrens (zum Eingießen der Durchführung) sowie eines Herstellungsverfahrens (zur Herstellung eines Wand- oder Bodenelements mit einer eingegossenen Durchführung) offenbart sein. Das Kompensationselement kann generell beim Einsetzen der Durchführung in eine Schalung von Vorteil sein, im Besonderen können die Vorteile in einem automatisierten Betonfertigteilwerk zum Tragen kommen.

Kommt es beim Einschalen zu einem axialen Druck auf die Durchführung, kann deren Länge bspw. über eine Verformung des Kompensationselements verringert werden. Bevorzugt ist das Kompensationselement federnd vorgesehen, ist die axiale Länge der Durchführung in einer Endposition der Schalung, insbesondere wenn das Wand- oder Bodenelement gegossen wird, also etwas größer als temporär während eines "Überschwingers".

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine Durchführung in einer axial geschnittenen Schrägansicht;
- Figur 2: die Durchführung und den Schnitt gemäß Figur 1 in einer Seitenansicht;
- Figur 3: eine Detailansicht zu Figur 2;
- Figur 4: einen Stopfen mit einem Kompensationselement zum Einsetzen in ein Rohrelement einer Durchführung;
- Figur 5: eine geschnittene Detailansicht zu Figur 4.

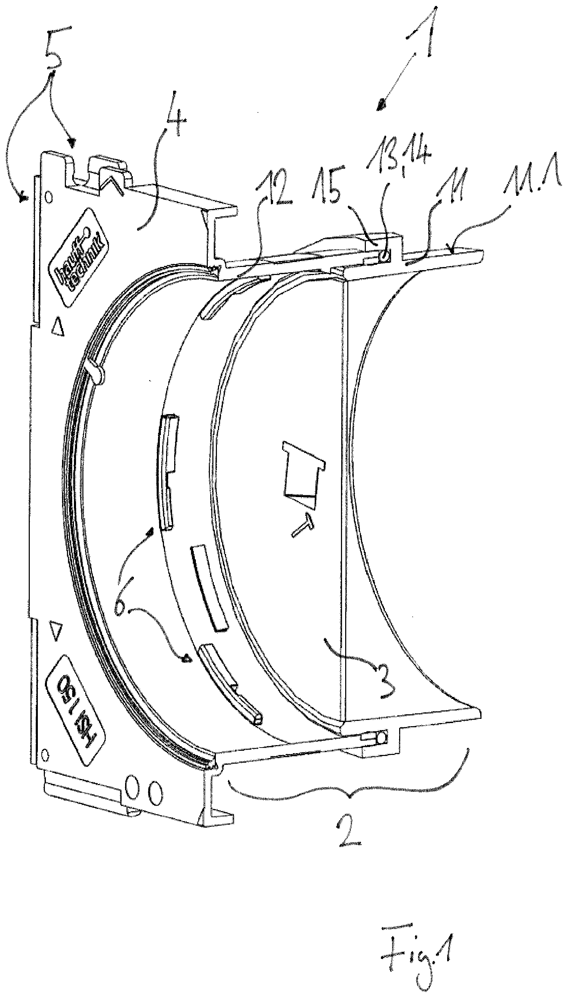

Figur 1 zeigt eine Durchführung 1 mit einem Rohrelement 2, das aus einem ersten Rohrelementteilstück 11 und einem zweiten Rohrelementteilstück 12 zusammengesetzt ist. In dem ersten Rohrelementteilstück 11 ist axial endseitig ein Blindverschluss 3 angeformt, der nach dem Eingießen der Durchführung 1 zum Hindurchführen einer Leitung ausgeschlagen wird. Axial endseitig am zweiten Rohrelementteilstück 12 ist eine Flanschplatte 4 angeformt, die beim Eingießen der Durchführung 1 flächig an einer Schalung anliegt. An der Flanschplatte 4 sind Formschlusselemente 5 angeordnet, mittels welcher mehrere Durchführungen 1 modular zusammenbaubar sind. Ferner ist beim Vergießen ein Verschluss axial endseitig in das zweite Rohrelementteilstück 12 eingesetzt, der aber vorliegend der Übersichtlichkeit halber nicht dargestellt ist. Innenseitig am zweiten Rohrelementteilstück 12 sind Stege 6 zu erkennen, die einer Schraub- bzw. Bajonettarretierung des Verschlusses dienen.

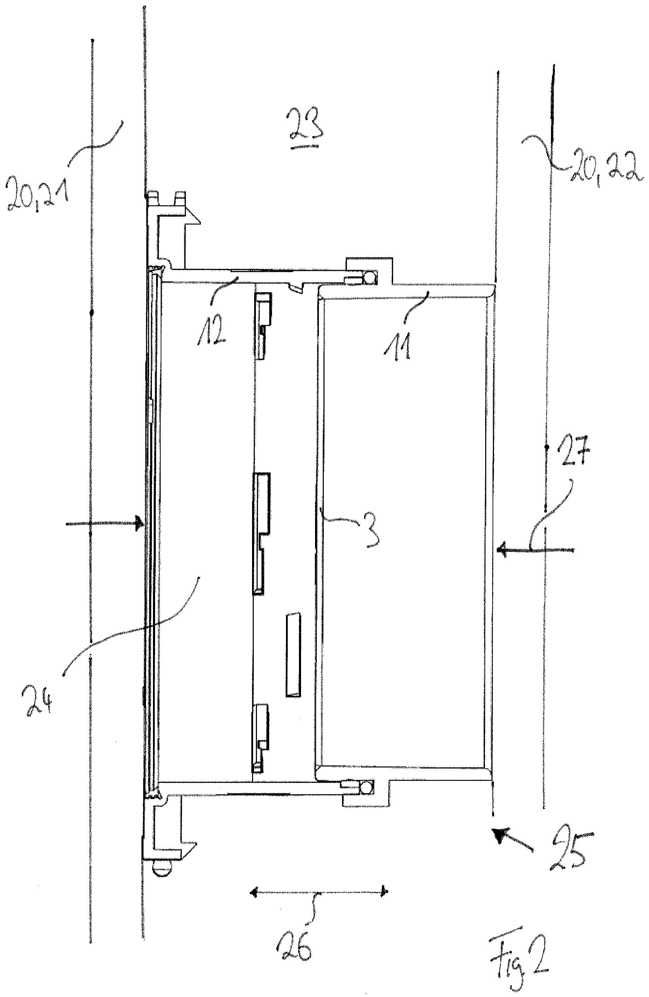

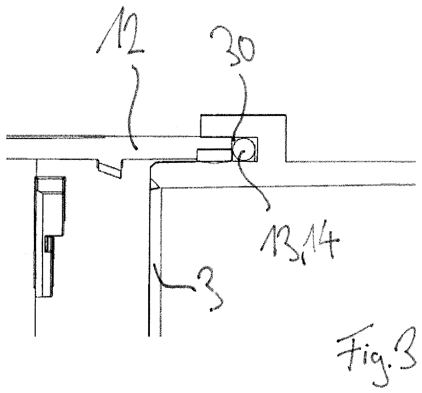

Eine Besonderheit liegt vorliegend in der Relativanordnung bzw. -lagerung der Rohrelementteilstücke 11,12. Zwischen diesen ist nämlich ein nicht erfindungsgemäß Kompensationselement 13 vorgesehen, und zwar in Form eines ringförmigen Elastomerelements 14, konkret eines O-Rings. Dieser sitzt zwischen einem axialen Ende des zweiten Rohrelementteilstücks und einem am ersten Rohrelementteilstück 11 ausgebildeten Kragen 15, der sich L-förmig von einer Außenwandfläche 11.1 des ersten Rohrelementteilstücks 11 weg erstreckt. Ergänzend wird auch auf die Seitenansicht gemäß Figur 2 und insbesondere die vergrößerte Darstellung gemäß Figur 3 verwiesen, welche die vom Kragen 15 gebildete Nut 30 im Detail illustriert. Am Grund dieser Nut 30 sitzt das Elastomerelement 14, und das zweite Rohrelementteilstück 12 ist mit seinem Ende in die Nut 30 eingeschoben.

Figur 2 zeigt die Durchführung 1 in einer schematisch skizzierten Situation beim Eingießen, illustriert nämlich eine Schalung 20. Diese weist ein erstes Schalungselement 21 und ein zweites Schalungselement 22 auf, dazwischen ist die Durchführung 1 angeordnet. Die Schalung 20 wird mit Beton 23 aufgefüllt, dabei hält die Durchführung 1 eine Durchgangsöffnung 24 in dem so hergestellten Wand- oder Bodenelement 25 frei.

Wie in der Beschreibungseinleitung im Einzelnen dargelegt, kann es zuvor, beim Schließen der Schalung 20, zu einem Druck in axialer Richtung 26 auf die Durchführung 1 kommen. Dies kann, jedenfalls in gewissem Umfang, mit dem Kompensationselement 13 abgefangen werden. Infolgedessen kann eine axial genommene Länge 27 der Durchführung 1 jedenfalls temporär verringert und damit ein übermäßiger Druckaufbau in der Durchführung 1 verhindert werden.

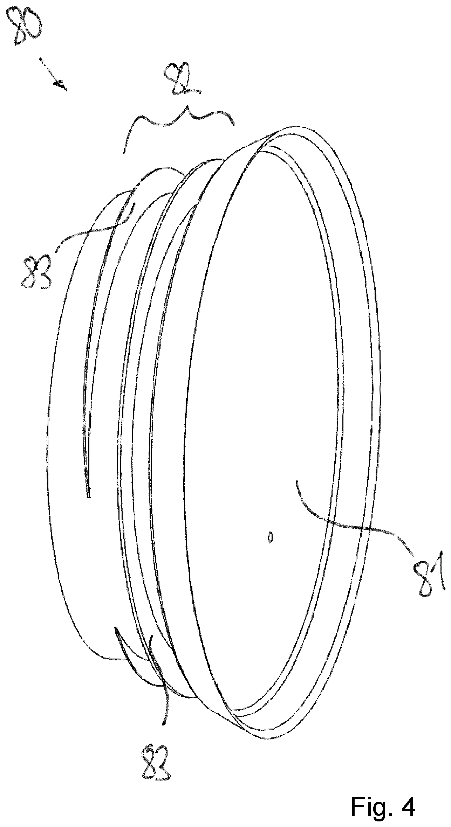

Figur 4 zeigt einen Stopfen 80, der axial endseitig in das Rohrelement 2 eingeschoben werden kann, bspw. der Durchführung 1 gemäß Figur 1 (wobei diese dann nicht mit dem Elastomerelement 14 ausgestattet sein muss, sondern auch allein der Stopfen der Kompensation dienen kann). Der Stopfen 80 weist eine Verschlusswand 81 auf, hält das Rohrelement 2 also endseitig geschlossen. In einem axialen Teilstück 82, das in das Rohrelement 2 eingeschoben wird, ist der Stopfen 80 mit Lamellen 83 ausgestattet, die ihn dann kraft- bzw. reibschlüssig im Rohrelement 2 halten.

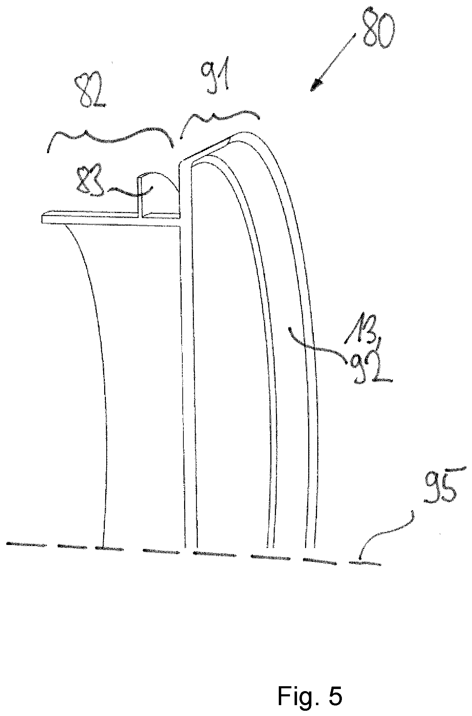

In dem Detailschnitt gemäß Figur 5 ist ferner zu erkennen, dass der Stopfen 80 in einem Axialabschnitt 91 mit einer Wandung 92 geformt ist, die konisch nach außen läuft, also gewinkelt zu einer Rohrachse 95. Diese dient als Kompensationselement 13. Mit dem Axialabschnitt 91 liegt die Durchführung 1 dann analog der vorstehenden Schilderung an der Schalung 20 an. Wird der axiale Druck zu hoch, kann die Wandung 92 nach außen geweitet und damit ein gewisser Axialversatz kompensiert werden. Die Wandung 92 kann analog der vorstehenden Schilderung eine geringere Dicke als das erste Rohrelementteilstück 11 haben, was das Aufweiten begünstigt. Ferner kann der Stopfen 80 auch aus einem weicheren Material vorgesehen sein, was denselben Vorteil ergibt.

## Patentansprüche

1. Durchführung (1) zum Einsetzen in eine Schalung (20) und Eingießen in ein Wand- oder Bodenelement (25), mit
einem Rohrelement (2) zum Freihalten einer Öffnung (24) in dem Wand- oder Bodenelement (25) beim Eingießen,
wobei das Rohrelement (2) ein Kompensationselement (13) aufweist, das solchermaßen vorgesehen ist, dass bei einem Druck auf die Durchführung (1) in einer, bezogen auf eine Rohrachse (95) des Rohrelements (2) axialen Richtung (26), eine in der axialen Richtung (26) genommene Länge (27) der Durchführung (1) verringert wird,
**dadurch gekennzeichnet, dass**
das Kompensationselement (13) an einem Stopfen (80) ausgebildet ist, der axial endseitig in das Rohrelement (2) eingesetzt oder einsetzbar ist.

2. Durchführung (1) nach Anspruch 1, bei welcher das Kompensationselement (13) solchermaßen federnd vorgesehen ist, dass bei einer Wegnahme des Drucks die Länge (27) der Durchführung (1) jedenfalls anteilig wieder zunimmt.

3. Durchführung (1) nach Anspruch 1 oder 2, bei welcher das Kompensationselement (13) axial endseitig in Form eines Axialabschnitts (91) des Stopfens (80) zur Anlage an der Schalung (20) vorgesehen ist, wobei in dem Axialabschnitt (91) eine Dicke (43) einer Wandung (42) kleiner ist als eine Wanddicke (44) in einem daran anschließenden Abschnitt des Rohrelements (2).

4. Durchführung (1) nach einem der vorstehenden Ansprüche, bei welcher das Kompensationselement (13) axial endseitig in Form eines Axialabschnitts (91) des Stopfens (80) zur Anlage an der Schalung (20) vorgesehen ist, wobei eine Wandung (92) in dem Axialabschnitt (91) eine konische Form hat.

5. Durchführung (1) nach Anspruch 4, bei welcher sich die konische Form der Wandung (92) zum axialen Ende hin weitet.

6. Durchführung (1) nach einem der vorstehenden Ansprüche, bei welcher zumindest ein zur Anlage an der Schalung (20) vorgesehener Axialabschnitt (91) des Stopfens (80) aus einem im Vergleich zu dem Rohrelement (2) weicheren Material vorgesehen ist.

7. Durchführung (1) nach Anspruch 6, bei welcher der Stopfen (80) insgesamt aus dem weicheren Material geformt ist.

8. Durchführung (1) nach einem der vorstehenden Ansprüche, bei welcher der Stopfen (80) in einem axialen Teilstück (82), das in das Rohrelement (2) eingesetzt oder einsetzbar ist, außenseitig mit einer Erhebung gefasst ist.

9. Durchführung (1) nach Anspruch 8, bei welcher die Erhebung als sich nach radial außen erhebende Lamelle (83) vorgesehen ist.

10. Durchführung (1) nach einem der vorstehenden Ansprüche, bei welcher das Rohrelement (2) ein erstes und ein zweites Rohrelementteilstück (11, 12) aufweist, wobei das zweite Rohrelementteilstück (12) solchermaßen in das erste Rohrelementteilstück (11) einschiebbar oder eingeschoben ist, dass die beiden Rohrelementteilstücke (11, 12) einen Überlappbereich bilden, wobei zumindest eines der Rohrelementteilstücke (11, 12) in dem Überlappbereich mit einer mechanischen Verstärkung (50) vorgesehen ist.

11. Durchführung (1) nach Anspruch 10, bei welcher die mechanische Verstärkung (50) in Form einer an einer Außenwandfläche (11.1) des zumindest einen Rohrelementteilstücks (11) ausgebildeten Verrippung (60, 61) vorgesehen ist.

12. Verwendung einer Durchführung (1) nach einem der vorstehenden Ansprüche zum Einsetzen in eine Schalung (20) und Eingießen in ein Wand- oder Bodenelement (25), insbesondere in einem Betonfertigteilwerk.

13. Verwendung nach Anspruch 12, bei welcher bei einem Schließen der Schalung (20) in der axialen Richtung (26) ein Druck auf die Durchführung (1) wirkt, infolgedessen sich aufgrund des Kompensationselements (13) die in der axialen Richtung (26) genommene Länge (27) der Durchführung (1) verringert.

14. Verwendung nach Anspruch 13, bei welcher das Kompensationselement (13) federnd ausgebildet ist und in einer Endposition der Schalung (20), in welcher das Wand- oder Bodenelement (25) gegossen wird, die in der axialen Richtung (26) genommene Länge (27) der Durchführung (1) aufgrund des federnden Kompensationselements (13) wieder größer als temporär während des Schließens ist.

15. Verwendung nach einem der Ansprüche 12 bis 14, bei welcher der Stopfen (80) nach einem Entschalen des Wand- oder Bodenelements (25) herausgenommen wird.

## Claims

1. Feed-through (1) for insertion into a formwork (20) and casting into a wall or floor element (25), having
a pipe element (2) for keeping free an opening (24) in the wall or floor element (25) during casting,
wherein the pipe element (2) has a compensation element (13) which is provided such that, in the event of a pressure on the feed-through (1) in an axial direction (26) with respect to a pipe axis (95) of the pipe element (2), a length (27) of the feed-through (1) taken in the axial direction (26) is reduced, **characterized in that**
the compensation element (13) is formed on a plug (80) which is inserted or can be inserted into the pipe element (2) axially at the end.

2. Feed-through (1) according to claim 1, in which the compensation element (13) is provided in a resilient manner such that, in the event of a removal of the pressure, the length (27) of the feed-through (1) increases again at least partially.

3. Feed-through (1) according to claim 1 or 2, in which the compensation element (13) is provided axially at the end in the form of an axial portion (91) of the plug (80) for abutment against the formwork (20), wherein, in the axial portion (91), a thickness (43) of a wall portion (42) is smaller than a wall thickness (44) in an adjoining portion of the pipe element (2).

4. Feed-through (1) according to one of the preceding claims, in which the compensation element (13) is provided axially at the end in the form of an axial portion (91) of the plug (80) for abutment against the formwork (20), wherein a wall portion (92) in the axial portion (91) has a conical shape.

5. Feed-through (1) according to claim 4, in which the conical shape of the wall portion (92) widens towards the axial end.

6. Feed-through (1) according to one of the preceding claims, in which at least one axial portion (91) of the plug (80) provided for abutment against the formwork (20) is provided from a material which is softer than the pipe element (2).

7. Feed-through (1) according to claim 6, in which the plug (80) as a whole is formed from the softer material.

8. Feed-through (1) according to one of the preceding claims, in which the plug (80) is held on the outside with an elevation in an axial part (82) which is inserted or can be inserted into the pipe element (2).

9. Feed-through (1) according to claim 8, in which the elevation is provided as a lamella (83) which rises radially outwards.

10. Feed-through (1) according to one of the preceding claims, in which the pipe element (2) has a first and a second pipe element part (11, 12), wherein the second pipe element part (12) can be inserted or is inserted into the first pipe element part (11) such that the two pipe element parts (11, 12) form an overlap region, wherein at least one of the pipe element parts (11, 12) is provided with a mechanical reinforcement (50) in the overlap region.

11. Feed-through (1) according to claim 10, in which the mechanical reinforcement (50) is provided in the form of ribbing (60, 61) formed on an outer wall surface (11.1) of the at least one pipe element part (11).

12. Use of a feed-through (1) according to one of the preceding claims for insertion into a formwork (20) and casting into a wall or floor element (25), in particular in a prefabricated concrete structure.

13. Use according to claim 12, in which, when the formwork (20) is closed, a pressure acts on the feed-through (1) in the axial direction (26), as a result of which the length (27) of the feed-through (1) taken in the axial direction (26) is reduced owing to the compensation element (13).

14. Use according to claim 13, in which the compensation element (13) is of resilient design and, in an end position of the formwork (20) in which the wall or floor element (25) is cast, the length (27) of the feed-through (1) taken in the axial direction (26) is again greater owing to the resilient compensation element (13) than temporarily during the closing.

15. Use according to one of claims 12 to 14, in which the plug (80) is removed after the wall or floor element (25) has been removed from the formwork.

## Revendications

1. Passage (1) destiné à être inséré dans un coffrage (20) et coulé dans un élément de paroi ou de fond (25), comprenant
un élément tubulaire (2) destiné à maintenir libre une ouverture (24) dans l'élément de paroi ou de fond (25) lors du coulage,
l'élément tubulaire (2) présentant un élément de compensation (13) qui est prévu de telle sorte que lors d'une pression sur le passage (1) dans une direction axiale (26) par rapport à un axe de tube (95) de l'élément tubulaire (2), une longueur (27) du passage (1) prise dans la direction axiale (26) soit réduite,
**caractérisé en ce que**
l'élément de compensation (13) est réalisé au niveau d'un bouchon (80) qui est inséré ou peut être inséré axialement du côté de l'extrémité dans l'élément tubulaire (2).

2. Passage (1) selon la revendication 1, dans lequel l'élément de compensation (13) est prévu de manière élastique de telle sorte que lors d'une suppression de la pression, la longueur (27) du passage (1) augmente à nouveau au moins proportionnellement.

3. Passage (1) selon la revendication 1 ou 2, dans lequel l'élément de compensation (13) est prévu axialement du côté de l'extrémité sous la forme d'une portion axiale (91) du bouchon (80) pour venir en appui contre le coffrage (20), une épaisseur (43) d'une paroi (42) dans la portion axiale (91) étant inférieure à une épaisseur de paroi (44) dans une portion adjacente de l'élément tubulaire (2).

4. Passage (1) selon l'une quelconque des revendications précédentes, dans lequel l'élément de compensation (13) est prévu axialement du côté de l'extrémité sous la forme d'une portion axiale (91) du bouchon (80) pour venir en appui contre le coffrage (20), une paroi (92) dans la portion axiale (91) présentant une forme conique.

5. Passage (1)selon la revendication 4, dans lequel la forme conique de la paroi (92) s'élargit vers l'extrémité axiale.

6. Passage (1) selon l'une quelconque des revendications précédentes, dans lequel au moins une portion axiale (91) du bouchon (80) prévue pour venir en appui contre le coffrage (20) est prévue en un matériau plus souple par rapport à l'élément tubulaire (2).

7. Passage (1) selon la revendication 6, dans lequel le bouchon (80) est formé dans son ensemble à partir du matériau plus souple.

8. Passage (1) selon l'une quelconque des revendications précédentes, dans lequel le bouchon (80) est entouré du côté extérieur par un rehaussement dans une portion partielle axiale (82) qui est insérée ou peut être insérée dans l'élément tubulaire (2).

9. Passage (1) selon la revendication 8, dans lequel le rehaussement est prévu sous forme de lamelle (83) s'élevant radialement vers l'extérieur.

10. Passage (1) selon l'une quelconque des revendications précédentes, dans lequel l'élément tubulaire (2) présente une première et une deuxième portion partielle d'élément tubulaire (11, 12), la deuxième portion partielle d'élément tubulaire (12) pouvant être insérée ou étant insérée dans la première portion partielle d'élément tubulaire (11)de telle sorte que les deux portions partielles d'élément tubulaire (11, 12) forment une région de chevauchement, au moins l'une des portions partielles d'élément tubulaire (11, 12) étant prévue dans la région de chevauchement avec un renforcement mécanique (50).

11. Passage (1) selon la revendication 10, dans lequel le renforcement mécanique (50) est prévu sous la forme d'un nervurage (60, 61) réalisé au niveau d'une surface de paroi extérieure (11.1) de l'au moins une portion partielle d'élément tubulaire (11).

12. Utilisation d'un passage (1) selon l'une quelconque des revendications précédentes destiné à être inséré dans un coffrage (20) et coulé dans un élément de paroi ou de fond (25), en particulier dans une pièce préfabriquée en béton.

13. Utilisation selon la revendication 12, dans laquelle lors d'une fermeture du coffrage (20) dans la direction axiale (26), une pression agit sur le passage (1), de sorte que la longueur (27) du passage (1) prise dans la direction axiale (26) soit réduite en raison de l'élément de compensation (13).

14. Utilisation selon la revendication 13, dans laquelle l'élément de compensation (13) est réalisé de manière élastique et dans une position finale du coffrage (20), dans laquelle l'élément de paroi ou de fond (25) est coulé, la longueur (27) du passage (1) prise dans la direction axiale (26) est de nouveau plus grande en raison de l'élément de compensation élastique (13) que temporairement pendant la fermeture.

15. Utilisation selon l'une quelconque des revendications 12 à 14, dans laquelle le bouchon (80) est retiré après un décoffrage de l'élément de paroi ou de fond (25).
